# EUROPEAN PATENT APPLICATION

(11) **EP 2 026 179 A1**
(43) Date of publication of application: **18.02.2009**
(21) Application number: 07114196.4
(22) Date of filing: 10.08.2007
(51) Int. Cl.: G06F 3/044, G06F 3/045, G06F 3/048

(54) **Method of generating input data**

(71) Applicant: IEE International Electronics & Engineering S.A.R.L., 6468 Echternach (LU)
(72) Inventor: Serban, Bogdan, 3376, Leudelange (LU); Boyer, Philippe, 57570, Boust (FR); Hoyer, David, 54441, Ayl (DE)
(74) Representative: Beissel, Jean

(57) **Abstract**

A method for use in conjunction with touchpad including a depressible cover and a detection circuit for capacitively detecting a position of a user's finger or stylus on the cover and for resistively detecting a position of a user's finger or stylus when the cover is being depressed comprises the following steps for generating input data for a processor-controlled application:
a) detecting whether the cover is depressed or not;
b) if it is detected that the cover is depressed, carrying out a resistive detection mode, the resistive detection mode including performing a resistive position measurement and computing position information data based upon the resistive position measurement;
c) if it is detected that the cover is not depressed, carrying out a capacitive detection mode, the capacitive detection mode including performing a capacitive position measurement and computing position information data based upon the capacitive position measurement;
d) making available to the computer-controlled application the position information data and an indication whether the position information data has been computed in the resistive detection mode or in the capacitive detection mode.

## Description

### Technical field

The present invention relates to a method for generating input data by means of a touchpad, in particular for a processor-controlled appliance, such as a program running on a computer, a cellular phone, a media player, a navigation system, a household appliance and the like.

### Background Art

Touchpads are typically used on electronic appliances that also comprise a display screen. To move a cursor (also referred to as a pointer) or another visual indicator on the display screen, the user puts his or her finger on the operating surface of the touchpad and then slides the finger while keeping it in light touch with the operating surface. In laptop computers and other electronic appliances, one or more separate buttons are often associated with the touchpad. These buttons provide "mouse-click" functionality, e.g. for selecting a displayed object currently highlighted or pointed at on the display, drag-dropping a displayed object (by positioning the cursor or visual indicator on the object to be dragged, pressing the button and keeping the button pressed while moving the cursor to the desired location, then releasing the button for "dropping" the object), etc. The disadvantage of separate buttons is that the user needs both his or her hands to access the mouse-click functionality. Indeed, the user usually depresses the button with the forefinger of one hand while moving the cursor with the forefinger or the middle finger of the other hand.

To overcome this disadvantage, touchpads have been proposed, in which mouse-click functionality can also be emulated by tapping the operating surface with the finger. Document US 5,907,327 describes that touchpads with such "tapping" function make it possible with one finger to perform not only the above-mentioned "single-click" operations (selecting, dragging, etc.) but also "double-click" operations (opening a folder, starting an application, etc.). Dragging can be carried out on a touchpad by first putting the cursor upon the displayed object to be dragged (e.g. an icon or window), then tapping the input area surface once, placing the finger on the input area surface immediately after the tapping and sliding the finger on the surface, thereby causing the cursor to move on the screen. Some touchpads even provide for the so-called drag-lock functionality, so that the finger may be lifted from the input area surface (e.g. when reaching the border of the input area) without causing the touchpad to leave the dragging mode. The touchpad may, in particular, be configured to go into drag-lock mode if the user's finger has been moved a predefined minimum distance after the touchpad had been placed into dragging mode.

While some people have no difficulty with the tapping functionality provided by such touchpads, others deliberately switch it off (if this is possible and if they know how this can be done) and work with the associated buttons or keys because they otherwise would often unintentionally trigger the tapping functionality. Accordingly, there is still room for making touchpads user-friendlier. In this regard, differentiation between intentional and unintentional user action is of particular concern.

Document US 6,424,338 mentions that mouse-clicks can be implemented by a switch responsive to downward pressure, positioned underneath a touch pad surface. Document US 2006/0232559 A1 discloses a capacitive touchpad with a physical key function, comprising a soft flexible first conductive layer, a second conductive layer and a soft flexible insulator layer disposed between the first and second conductive layers. The insulator layer has holes therein for the first conductive layer to connect to the second conductive layer while the touchpad is pressed and to thus trigger a predetermined key function.

### Object of the Invention

The aim of the present invention is to provide an improved method for generating input data using a touchpad.

### General Description of the Invention

The method according to the present invention may be used in conjunction with a particular type of touchpad, i.e. a touchpad comprising a depressible cover (providing the operating surface of the touchpad) and a detection circuit for capacitively detecting a position of a user's finger or stylus on the cover and for resistively detecting a position of a user's finger or stylus when the cover is being depressed. For generating input data for a processor-controlled application, the method comprises the following steps:
a) detecting whether the cover is depressed or not;
b) if it is detected that the cover is depressed, carrying out a resistive detection mode, the resistive detection mode including performing a resistive position measurement and computing position information data based upon the resistive position measurement;
c) if it is detected that the cover is not depressed, carrying out a capacitive detection mode, the capacitive detection mode including performing a capacitive position measurement and computing position information data based upon the capacitive position measurement;
d) making available to the computer-controlled application (as input data) the position information data and an indication whether the position information data has been computed in the resistive detection mode or in the capacitive detection mode.

Those skilled will appreciate that, as used herein, position information may designate absolute position information, e.g. the coordinate or the coordinates of the user's finger or stylus in a reference frame fixed with respect to the operating surface of the touchpad, or differential position information, e.g. the difference vector between the positions of the user's finger or stylus at two points of time separated by a short time interval (i.e. a velocity vector). The position information data may also comprise double-differential position information, e.g. the difference between the velocity vectors of the user's finger or stylus at two points of time separated by a short time interval (i.e. an acceleration vector).

Preferably, a touchpad used in conjunction with the present method comprises a support element (e.g. a board, a plate, a sheet or a film), a cover (e.g. a board, a plate, a sheet or a film) having a first surface facing away from the support element and a second surface facing towards the support element and one or more spacers mounting the cover at a certain distance from the support element in such a way that the cover spans over the support element in the input area while it is depressible towards the support element by a force acting on the input area of the touchpad. As it will be apparent for those skilled in the art, the support element preferably comprises an insulating, mechanically substantially rigid plate or a combination of a mechanically substantially rigid base plate and an insulating sheet or film on the side of the base plate facing the cover.

The touchpad may comprise a capacitive sensing arrangement (electrodes and connection leads) integrated into the cover and a separate resistive sensing arrangement (electrodes and resistive elements) arranged on the support element and the second surface of the cover.

Alternatively and preferably, the electrodes of the capacitive sensing arrangement also form a part of the resistive sensing arrangement. For instance, in case of a "one-dimensional" touchpad (i.e. a touchpad configured and arranged for sensing the position of the user's finger or stylus only along a single, straight or curved, coordinate axis), the touchpad preferably comprises a resistive trace so arranged on the support element that it extends along the main line of extension (the coordinate axis) of the input area, with at least one terminal contacting the resistive trace at a particular point of the main line of extension of the input area, and a set of detection electrodes (preferably detection electrodes having a resistivity of not more than 2 kΩ/square) arranged on the second surface of the cover in facing relationship with the resistive trace (having a resistivity of preferably not more than 100 kΩ/square, more preferably not more than 10 kΩ/square, and still more preferably between 2 and 10 kΩ/square), these detection electrodes being configured and arranged, e.g. individually connectable to the detection circuit, both for capacitively detecting a position of a user's finger or stylus when the user's finger or stylus is in proximity of or in light touch with the first surface of the cover, and for resistively detecting a position of a user's finger or stylus when the user's finger or stylus depresses the cover and so brings at least one of the detection electrodes into electrical contact with the resistive trace.

Those skilled will appreciate that by the proposed method, the position of a user's finger or stylus (or whatever else they might use for operating the touchpad) can be detected in two different ways, namely by a capacitive measurement or a resistive measurement. Which measurement is actually used depends on whether the cover of the touchpad is depressed or not. If the cover is not depressed ("soft touch" or "light touch"), the detection circuit of the touchpad is brought into a mode of operation, in which it detects the position of the user's finger or stylus capacitively, i.e. by measuring the capacitive coupling between individual ones of a plurality of electrodes and the user's finger or stylus and deriving the desired position information data from the measurements made. If the cover is depressed ("hard touch") the detection circuit is brought into a mode of operation, in which it detects the position of the user's finger or stylus resistively. Those skilled will understand that for this purpose the detection circuit preferably comprises a sensing arrangement wherein one or more resistances change depending of the location where the cover is depressed. Those skilled will further note that if the user uses a stylus to operate the touchpad, the tip of the stylus has to be configured such that it capacitively couples to the detection electrodes. This is the case, for instance, for a conductive stylus (e.g. a metal stylus).

Preferably, the step of making available the position information data and the indication whether the cover is depressed or not comprises storing the position information data and the indication in a memory, on which the application has access for reading the data stored therein. Alternatively, the method may also comprise outputting one or more signals containing the position information data and the indication for making these data available to the application.

The above steps a), b) or c), and d) are preferably carried out repeatedly (cyclically), at a rate sufficient for making available the position information data and the indication whether the cover is depressed in real time or nearly in real time, i.e. with cycle (steps a), b) or c), and d)) durations preferably not exceeding 40 ms, more preferably not exceeding 20 ms and still more preferably not exceeding 5 ms.

According to a preferred embodiment of the invention the resistive detection mode includes adjusting the position information data currently being computed to the preceding position information data if the preceding position information data have been computed in the capacitive detection mode. Such adjustment (one might also call it calibration or compensation) could be necessary in view of drifts, tolerances etc. and might include taking the previous position information as a reference relative to which the resistively detected position information would then be determined. Those skilled will appreciate that this embodiment of the method avoids discontinuities (or jumps) in the position information resulting from the cover being brought into the depressed state. In particular, if in a given iteration of the method steps, it is detected that the cover is not depressed, a capacitive detection mode is carried out, including the performing of a capacitive position measurement and the computing of a first position information data based upon the capacitive position measurement. If in the subsequent iteration it is detected that the cover is depressed, a resistive detection mode is carried out, including performing a resistive position measurement, computing second position information data based upon the resistive position measurement and, since the preceding first position information data have been determined capacitively, adjusting the second position information data currently being computed to the first position information data, thereby calibrating the resistive measurement and avoiding undesired high differences of the determined position between two subsequent measurements when a change of detection mode occurs. Furthermore, the capacitive detection mode preferably includes adjusting the position information data currently being computed to the preceding position information data if the preceding position information data have been computed in the resistive detection mode. This avoids discontinuities in the position information resulting from the cover being brought out of the depressed state. In particular, if in a given iteration of the method steps, it is detected that the cover is depressed, a resistive detection mode is carried out, including the performing of a resistive position measurement and the computing of first position information data based upon the resistive position measurement. If in the subsequent iteration it is detected that the cover is not in the depressed state any more, a capacitive detection mode is carried out, including performing a capacitive position measurement, computing second position information data based upon the capacitive position measurement and, since the preceding first position information data have been determined resistively, adjusting the second position information currently being computed to the first position information data, thereby calibrating the capacitive measurement and avoiding undesired high differences of the determined position between two subsequent measurements when a change of detection mode occurs.

Those skilled will appreciate that the present method is preferably implemented by means of a touchpad controller for a touchpad.

The most important advantage of the present invention is that the position information data provided using the present method is complemented by the indication whether the cover of the touchpad is depressed or not. The application to which the position information and this indication is made available may thus assign different actions to the position information depending on whether the cover is depressed or not, i.e. depending on whether the user lightly touches the operating surface or depresses it. Most preferably, the load threshold at which the cover of the touchpad is depressed (and detected as being depressed) is chosen in the range from 50-500 g (corresponding to about 0.5-5 N), more preferably in the range from 100-500 g, and still more preferably in the range from 100-300 g. Those skilled will appreciate that this "hard touch threshold" lies well above the loads that need to be applied for the capacitive sensing. Indeed, reliable capacitive detection of the user's finger or stylus is possible even when the user holds the finger immediately above the operating surface. Typically, the user of a touchpad applies a load in the range from 5-20 g, which is sufficient for obtaining a certain tactile feedback when operating the touchpad. The above hard touch threshold being well above these values, unintentionally exceeding the hard touch threshold is seldom.

Preferably, the indication whether the cover is depressed or not is made available in form of a status flag. This is advantageous, in particular, if the detection circuit outputs the position information data over a channel common to both the capacitive and the resistive detection modes. Such a status flag may be any kind of signal understandable by an electronic appliance of which the touchpad may be a component or which the touchpad may communicate with. The status flag may, for instance be provided over a wire or lead separate from the wire(s) or lead(s) used for outputting the position information. Alternatively, when such flag is transmitted over the same wire(s) or lead(s) as the position information data, each individual entity of position information data may comprise its individual flag indicating the origin of the position information.

As an alternative to using a status flag, the indication whether the cover is depressed or not may be provided by using a first communication channel for position information data computed in the capacitive detection mode and a second communication channel (distinct from the first communication channel) for position information data computed in the resistive detection mode. Those skilled will appreciate that these channels may be separate physical or virtual channels. For instance, position information data generated in the capacitive detection mode could be stored in a first memory region to which the processor-controlled application has access while position information data generated in the resistive detection mode could be stored in a second memory region to which the processor-controlled application has access. Those skilled will be aware that there are further possible protocols for making the indication whether the cover is depressed or not available to the application.

The different actions that the user may initiate by depressing the cover or releasing it may depend on the processor-controlled application. The application may, for instance, use the position information made available to it to move a cursor (a pointer) or any other visual indicator on a display. If the cover is not depressed, i.e. when the user touches the operating surface only lightly, the application might be in a pointing or scrolling mode, wherein the cursor or the visual indicator is moved with respect to certain displayed items. The action of the user depressing the cover, on the other hand, might cause the application to switch to a selecting mode, wherein the item currently pointed at by the cursor or visual indicator is selected.

A processor-controlled application running on an electronic appliance (e.g. a laptop computer, a cellular phone, a media player, a household appliance, a car appliance, a navigation system, etc.) equipped with a suitable touchpad is preferably configured for operating in a first mode and a second input mode causing different responses of the electronic appliance to the position of a user's finger or stylus outputted by the detection circuit. Whether the first or the second input mode is active depends on whether the cover of the touchpad is being depressed or not. Preferably, if the electronic appliance comprises a display screen and a display controller for controlling the display screen, the display controller indicates on the display screen whether the electronic appliance is in the first or the second input mode. For instance, the appearance of a cursor may vary according to the input mode, a visual control element may appear, etc.

Advantageously, the first input mode may comprise at least one of a pointing mode and a scrolling mode, and the second input mode comprises at least one of a selecting mode and a drag-and-drop mode. Those skilled will appreciate that the invention is especially useful in an electronic appliance in which the touchpad and the display are separate, e.g. in a laptop computer. Indeed, when using such appliances, the operator often has to first move the cursor or visual indicator to the desired location, before he can choose another action by clicking a button or tapping. If the touchpad according to the present invention is used, the operator may move the cursor or visual indicator by lightly touching the operating surface and moving the finger thereon. When the cursor is in the desired location, the second action may be initiated by depressing the cover of the touchpad (e.g. once or twice). Drag-dropping may be considerably simplified since appliance can be so configured that the operator may move a selected item to another location by keeping the cover depressed when moving his or her finger or stylus.

If the electronic appliance comprises an audio output and an audio controller for converting audio files into audio signals for the audio output, the first input mode preferably comprises one of (a) a volume adjustment mode for enabling a user of adjusting a sound volume by moving his/her finder or stylus and (b) a search mode for moving forward or backward through the audio files, whereas the second input mode comprises the other one of the volume adjustment mode and the search mode.

It shall be noted that a great variety of methods of capacitive measurement is known in the art and need not be explained in detail for the full understanding of the present invention. It may nevertheless be worthwhile mentioning that the most common ones of these methods include current-versus-voltage phase shift measurement, charging time measurement, the so-called charge transfer technique (wherein the capacitor being sensed is cyclically switched to a voltage source and to a summing capacitor, so that the charge on the summing capacitor increases with each cycle, and wherein the number of cycles or the time necessary to reach a predefined charge or voltage on the summing capacitor is determined), the so-called relaxation oscillator method (wherein the capacitor being sensed is connected to a current source so that the voltage on the capacitor increases with time, the voltage of the capacitor is fed to a comparator, which goes high for a time period having a certain minimum duration and closes a switch which resets the capacitor voltage to ground; the frequency of the peaks in the comparator output indicates the capacitance), and many more. Detection circuits for measuring capacitance are commercially available, e.g. from Cypress, Quantum Research Group, etc.

### Brief Description of the Drawings

Further details and advantages of the present invention will be apparent from the following detailed description of several not limiting embodiments with reference to the attached drawings, wherein:
Fig. 1 is a first cross-sectional view of a linear touchpad on which a user moves his or her finger on the operating surface while exerting only little pressure;
Fig. 2 is another cross-sectional view of the touchpad of Fig. 1, when the user depressed the cover of the touchpad with his or her finger;
Fig. 3 is a further cross-sectional view of the touchpad of Fig. 1, when the user moves his or her finger while keeping the cover of the touchpad depressed;
Fig. 4 is yet a further cross-sectional view of the touchpad of Fig. 1, when the user lifts his or her finger and releases the pressure on the cover;
Fig. 5 is a schematic illustration of the operation of a linear touchpad in the situation of Fig. 1;
Fig. 6 is a schematic illustration of the operation of a linear touchpad in the situation of Fig. 2;
Fig. 7 is a schematic illustration of the operation of a linear touchpad in the situation of Fig. 3;
Fig. 8 is a schematic illustration of the operation of a linear touchpad in the situation of Fig. 4;
Fig. 9 is a flow diagram of a basic embodiment of a method of generating input data by means of a touchpad;
Fig. 10 is a flow diagram of a further embodiment of a method of generating input data by means of a touchpad;
Fig. 11 is a cross-sectional view of an stacked touchpad including a capacitive touchpad on top of a resistive touchpad.

### Description of Preferred Embodiments

As indicated hereinbefore, the method according to the invention requires a touchpad with a depressible cover and a detection circuit for capacitively detecting the position of a user's finger or stylus on the cover and for resistively detecting the position of a user's finger or stylus when the cover is being depressed.

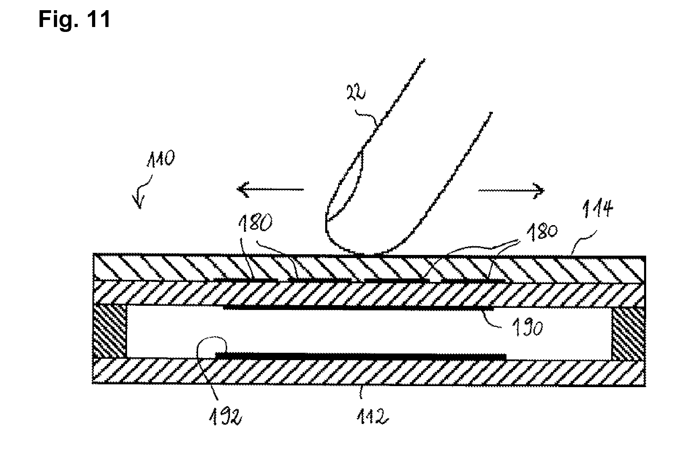

A suitable touchpad of a first type is essentially a stacked arrangement of a capacitive touchpad and a resistive touchpad sharing a common detection circuit. Such a touchpad is shown in Fig. 11. Touchpad 110 comprises a set of electrodes 180 for capacitive sensing arranged in the cover 114 and a separate arrangement of one or more electrodes 190 arranged on the lower surface of the cover and one or more resistive elements 192 arranged on the upper surface of a support plate 112, or conversely. When the cover 114 is depressed, the one or more electrodes 190 are brought into contact with the one or more resistive elements 192 and the position where the contact has occurred may be detected by a resistive measurement. Possible layouts for resistive touchpads are well known in the art and need not be explained in detail herein. The interested reader may find more details about resistive touchpads e.g. in US 4,983,786 or WO 2004/092940 A2.

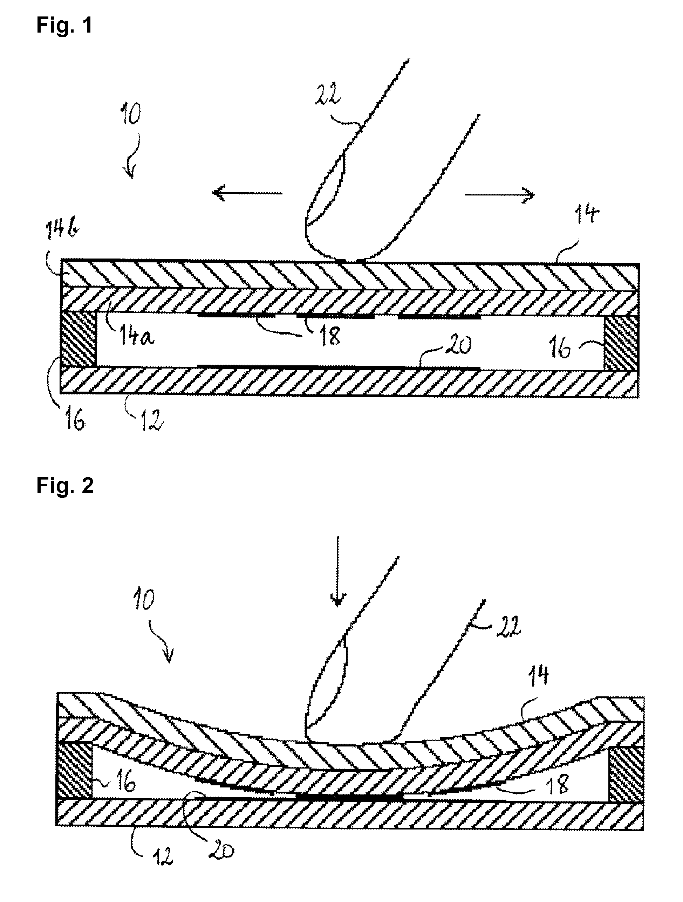

A suitable touchpad of a second type has a first set of electrodes arranged on the lower surface of the cover and one or more resistive elements on the upper surface of the support, in facing relationship with the electrodes of the lower surface of the cover. The electrodes of the lower surface of the cover are used for both the capacitive measurement and the resistive measurement. Accordingly, no separate set of electrodes is provided for the capacitive sensing. A preferred embodiment of a touchpad of the second type is shown in Figs. 1 to 4.

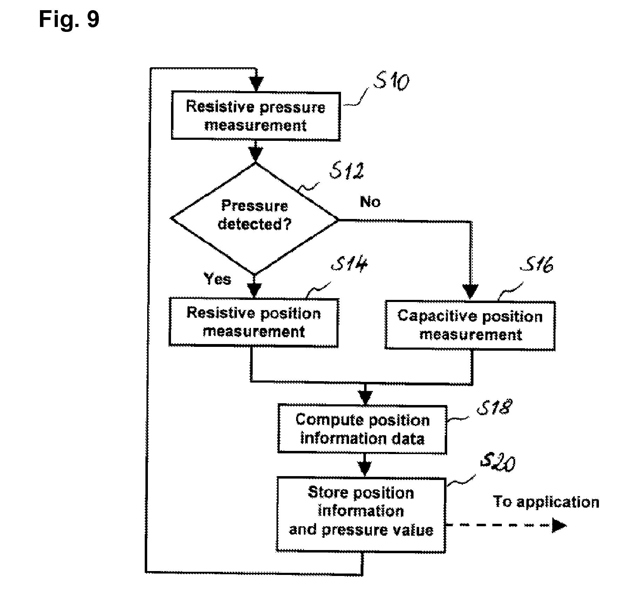

A basic embodiment of a method of generating input data with a touchpad is shown in the flow diagram of Fig. 9. While the touchpad is in operation, the controller of the touchpad cyclically carries out a certain number of steps. Each cycle starts with a resistive pressure measurement S10. If pressure is detected (S12), the cover of the touchpad is deemed to be in the in the depressed position and the controller carries out a resistive position measurement S14. If no pressure is detected in step S12, the cover of the touchpad is deemed to be in the (undepressed) rest position and the controller carries out a capacitive position measurement S16. From the measurement values determined either in step S14 or S16, the controller computes, as indicated at S18, the relevant position information data (e.g. coordinates, change of coordinates with respect to a previously determined position, and the like). The controller then stores (S20) the position information data and the pressure value determined in step S10 in a memory, which is accessible for a processor-controlled application. Alternatively or additionally to storing the pressure value, the controller could also store the result of the test carried out at S12.

The pressure value and/or the result of the test of step S12 made available to the processor-controlled application at S18 represents an indication whether the position information data have been computed via resistive measurement or via capacitive measurement. In the application, different operations may be carried out depending on whether the user touches the operating surface lightly or depresses the cover. Preferably, lightly touching the operating surface is associated with moving a cursor or visual indicator on a display whereas depressing the cover is associated to an action that would otherwise be triggered by a mouse-click, e.g. selecting an object the cursor is currently pointing at, launching a program, etc. An example of a touchpad and a possible way of using it is now described with reference to Figs. 1 to 8.

Touchpad 10 of Figs. 1 to 4 is configured for detecting the position of a user's finger or stylus in a single dimension. The touchpad 10 has an elongated input area with a main line of extension, which defines the dimension along which the user may move his or her finger or stylus and in which the position is detected. The touchpad 10 comprises a support element 12, a cover plate 14 and a spacer 16 delimiting the input zone, in which the cover plate 14 spans over the support element 12. The support element 12 is shown here as a mechanically rigid insulating plate but those skilled will appreciate that the support element more preferably comprises a mechanically rigid base plate having an insulating substrate, such as a film or a sheet, applied on the side facing the cover plate 14. The cover plate comprises an insulating substrate 14a and a protective layer 14b applied to the surface of the substrate 14a that faces toward the operator. The protective layer 14b is made of a wear-resistant material on which the user's finger may glide easily without sticking. Detection electrodes 18 are arranged on the surface of the substrate 14a facing the support plate 12. The detection electrodes18 are electrically insulated from one another and are disposed along the main line of extension of the input area of the touchpad. A resistive trace 20 (shown in Figs. 1 to 4 as a continuous resistive strip) is arranged on the surface of the support plate in facing relationship with the detection electrodes 18.

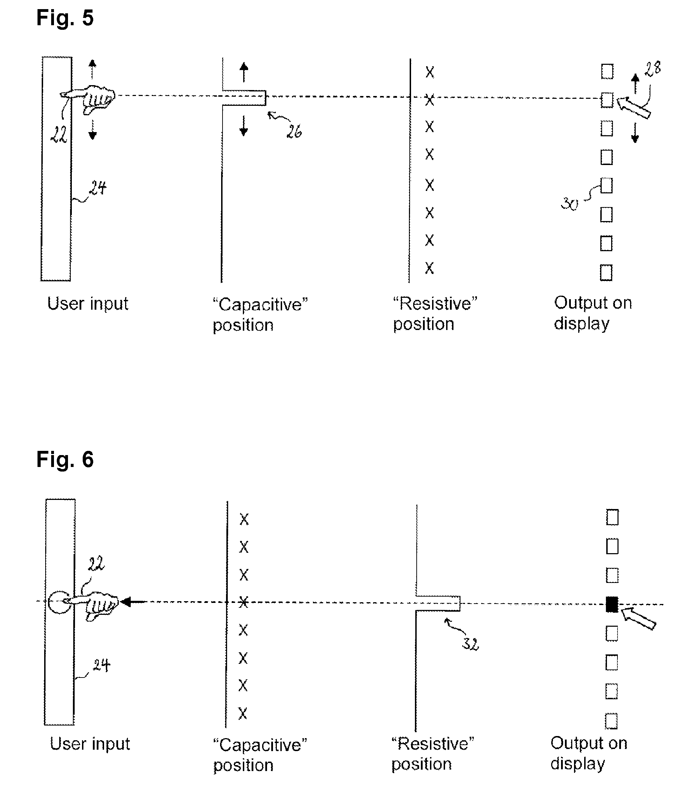

Each one of Figs. 5 to 8 shows a sketch of the user's input according to Figs. 1 to 4, respectively, corresponding position information (in this case the coordinate of the finger tip on the main line of extension of the input area) as calculated based upon the capacitive measurement and upon the resistive measurement, respectively, and an example of an associated action on a display screen of an electronic appliance.

When the user brings his or her finger 22 into close proximity with or in light touch with the operating surface, the detection circuit of the touchpad measures the capacitive coupling of the individual detection electrodes 18 to the finger 22 and evaluates these measurements so as to derive the desired position information relating to the finger 22. As the user moves his or her finger 22 on the operating surface along the main line of extension of the input area 24, while exerting no or little force (e.g. below 50 g) onto the cover plate 14 (situation of Figs. 1 and 5), the capacitive coupling between the detection electrodes 18 and the finger 22 changes accordingly. The position information 26 calculated based on the capacitive measurement, output by the touchpad 10, varies accordingly. As long as there is no electrical contact between the detection electrodes 18 and the resistive trace 20, any resistive determination of the position of the finger does not provide a meaningful result. In Figs. 5 to 8, undefined values of position are illustrated as "X". In the application example, moving of the finger 22 while exerting little or no force on the cover plate is associated with moving a pointer 28 through a list of items 30.

As the user increases the pressure on the cover plate 14, the latter eventually bends and is depressed onto the support plate 12, whereby one or more of the detection electrodes 18 come into electrical contact with the resistive trace 20 (Figs. 2 and 6). The rigidity of the cover plate 14, the geometry of the input area and the configuration of the spacer are adjusted to one another in such a way that the minimum load that the user has to apply to the cover plate 14 in order to establish the contact between the detection electrodes 18 and the resistive trace lies well above the force that he or she has to apply in order to get the tactile feedback of having his or her finger in light touch with the cover plate. The latter force may be slightly user-dependent but is normally comprised in the range between 5 and 20 g, possibly up to 30 g. Accordingly, the minimum load for contact is preferably at least about 100 g or more. The touchpad should not have too high a minimum load for contact since this would result in uncomfortable operation of the touchpad. When the detection electrodes 18 and the resistive trace are in contact, the position of the point of application of the force is detected by resistive measurement(s), which results in an output position 32. Such a resistive measurement could comprise applying a voltage gradient through the resistive trace 20, and then measuring the resulting voltages on the detection electrodes. The measured voltage then indicates the position of the point of application of the force and can be converted into the position information. As illustrated in Fig. 6, the capacitive determination of the position does not provide a meaningful output when the detection electrodes are in contact with the resistive trace 20. In the application example, depressing the cover plate 14 and bringing the detection electrodes in contact with the resistive trace is associated with selecting the item 30 that the pointer 28 is currently pointing at.

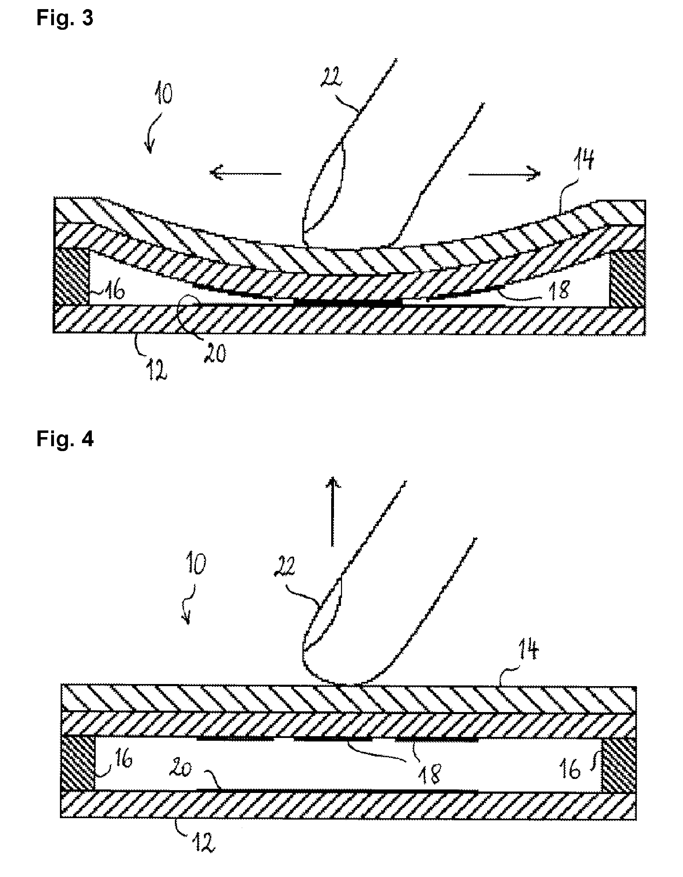

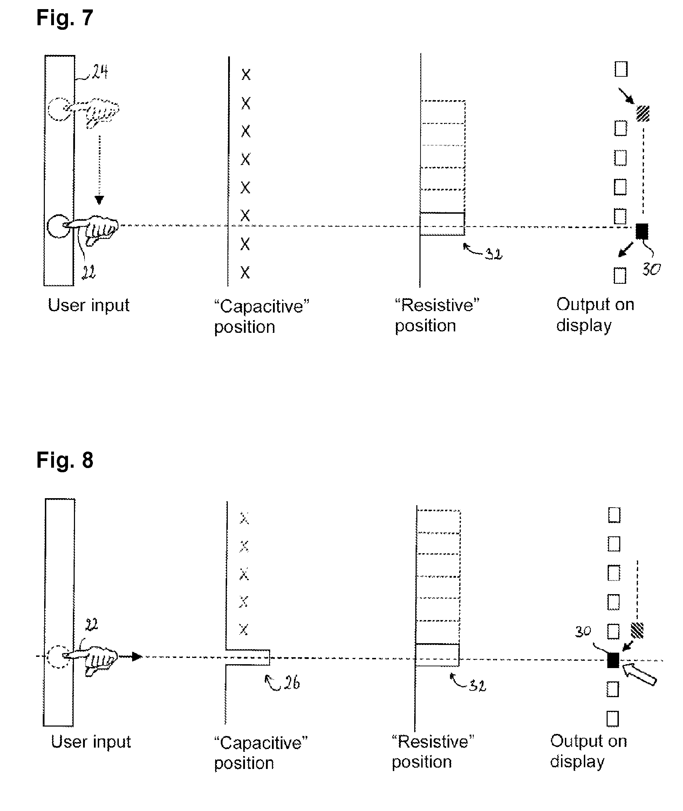

As the user then moves his or her finger 22 along the input area while keeping the cover plate 14 depressed (Figs. 3 and 7) the change in position is reflected by the resistive measurement. In the application example, this action is associated to dragging the selected item 30 through the list.

When the user lifts his finger 22 (Figs. 4 and 8), the cover plate 14 returns to its rest position and the electrical contact between the detection electrodes and the resistive trace is interrupted. The touchpad then reverts to the capacitive measurement for detecting the position of the user's finger 22. In the application example, this action is associated to dropping the selected item 30 at the location it has been dragged to.

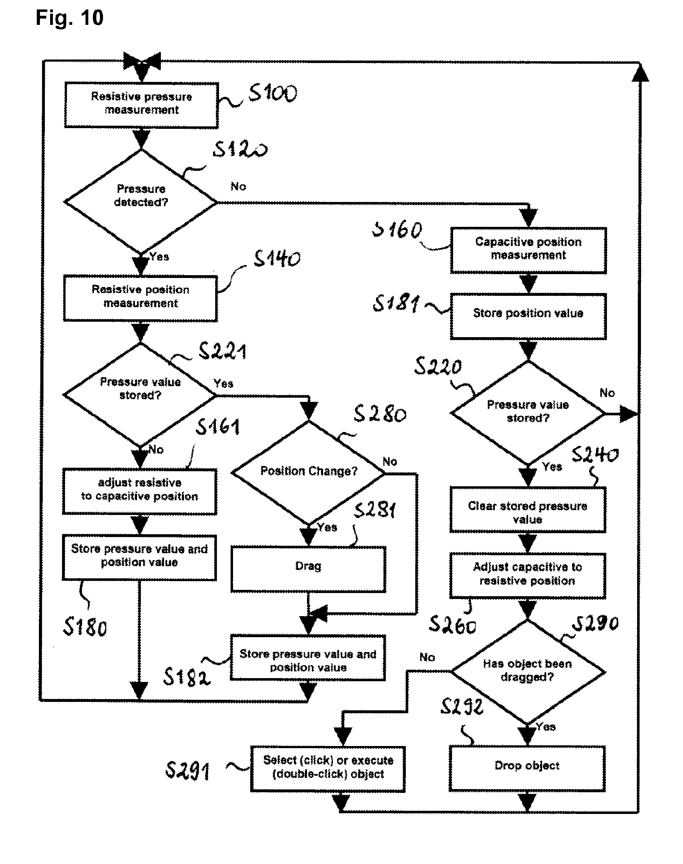

Another embodiment of a method of generating input data with a touchpad and using these input data is shown in the flow diagram of Fig. 10. In a first step S100, a resistive pressure measurement is carried out.

If the user applies sufficient pressure on the operating surface, this is detected in step 120 and the detection circuit switches to the resistive detection mode, which comprises, each time, a resistive position measurement S140 and the step S180 or S182 of storing the computed position information data and the pressure value determined in step S100 and/or the result of the test in step S120. The "pressure value" in Fig. 10 may be, in the simplest case, a flag indicating only that a pressure has been detected in step 120 (the absence of the flag thus means that no pressure has been detected in that step).

In the resistive detection mode, it is also determined, either before or after the resistive position measurement, whether a pressure value is currently stored (in step 221). If this is the case, this means that the previous measurement was a resistive one and that the user has moved his or her finger or stylus while keeping the cover depressed. In this case, the detection circuit switches to dragging mode (steps S280, S281 and S182), wherein, if a position change is detected (step S280), an object currently pointed at by the cursor is dragged (step 281) to the location corresponding to the newly determined position information. The latter position information is also stored in step S182. No dragging is carried out if no position change is detected.

If, in step 221, no pressure value is currently stored, this means that the current resistive measurement is the first one after at least one capacitive position measurement and that the user has just begun depressing the cover. In this case, the current resistively detected position is adjusted, in step 161, to the capacitively detected position stored in memory during the previous execution of step 181, in order to avoid sudden jumps in the outputted position arising from the change of detection mode.

If it is determined, in step 120, that the user applies no or only low pressure on the cover of the touchpad, the detection circuit switches to the capacitive detection mode and carries out a capacitive position measurement (step S160), computes the position information data and stores them (step S181).

In step S220 of the capacitive detection mode, it is tested whether a pressure value is currently stored. If this is the case, this means that the previous measurement was a capacitive one and that the user is has moved his or her finger or stylus with little pressure. If a pressure value is currently stored, this means that the current capacitive measurement is the first one after at least one resistive position measurement and that the user has just released the pressure on the operating surface. In this case, the pressure value (e.g. the flag) is cleared (in step S240) and the newly capacitively determined position is adjusted to the one stored in memory (in step 260). The adjusting of the capacitive position to the stored position avoids sudden jumps in the outputted position arising from the change of detection mode.

In step S290, it is decided upon the action to carry out after it has been determined that the user has just lifted his or her finger. If it is detected that the application had been in dragging mode (S281) before the user released pressure, the object that has been dragged is dropped (step S292). Otherwise, if it is detected that the application had not been in dragging mode before the user released pressure, the application carries out a "select" or "execute" action (step S291).

## Claims

1. A method of generating, with a touchpad, input data for a processor-controlled application, said touchpad comprising a depressible cover and a detection circuit for capacitively detecting a position of a user's finger or stylus on said cover and for resistively detecting a position of a user's finger or stylus when said cover is being depressed, said method comprising the steps:
a) detecting whether said cover is depressed or not;
b) if it is detected that said cover is depressed, carrying out a resistive detection mode, said resistive detection mode including performing a resistive position measurement and computing position information data based upon said resistive position measurement;
c) if it is detected that said cover is not depressed, carrying out a capacitive detection mode, said capacitive detection mode including performing a capacitive position measurement and computing position information data based upon said capacitive position measurement;
d) making available to said application said position information data and an indication whether said position information data have been computed in said resistive detection mode or in said capacitive detection mode.

2. The method as claimed in claim 1, wherein step d) comprises storing said position information data and said indication in a memory that can be accessed by said application for reading said position information data and said indication.

3. The method as claimed in claim 1, wherein step d) comprises outputting one or more signals containing said position information data and said indication.

4. The method as claimed in claim 1, 2 or 3, wherein steps a), b) or c), and d) are carried out repeatedly.

5. The method according to claim 4, wherein said resistive detection mode includes:
adjusting the position information data currently being computed to the preceding position information data if the preceding position information data have been computed in said capacitive detection mode.

6. The method according to claim 4 or 5, whereby said capacitive detection mode includes:
adjusting the position information data currently being computed to the preceding position information data if the preceding position information data have been computed in said resistive detection mode.

7. The method as claimed in any one of claims 1 to 6, wherein said position information data comprise absolute position information.

8. The method as claimed in any one of claims 1 to 7, wherein said position information data comprise differential position information.

9. The method as claimed in any one of claims 1 to 7, wherein said position information data comprise double-differential position information.

10. A touchpad controller for a touchpad, said touchpad comprising a depressible cover and a detection circuit for capacitively detecting a position of a user's finger or stylus on said cover and for resistively detecting a position of a user's finger or stylus when said cover is being depressed, said controller being configured and arranged for carrying out the method as claimed in any one of claims 1 to 8.
